# EUROPEAN PATENT SPECIFICATION

(11) **EP 4 602 303 B1**
(45) Date of publication and mention of the grant of the patent: **04.11.2026**
(21) Application number: 23789637.8
(22) Date of filing: 12.10.2023
(51) Int. Cl.: F24H 1/00, B60H 1/22, F24H 1/10, F24H 9/20, F24H 15/132, F24H 15/25, F24H 15/37, H05B 1/02, H05B 3/00, H05B 3/82

(54) **A THERMAL MANAGEMENT SYSTEM AND METHOD FOR AN AUTOMOBILE VEHICLE**
WÄRMEKONTROLLSYSTEM UND VERFAHREN FÜR EIN KRAFTFAHRZEUG
SYSTÈME ET MÉTHODE DE GESTION THERMIQUE POUR UN VÉHICULE AUTOMOBILE

(30) Priority: 14.10.2022 IN 202241058882
(43) Date of publication of application: 20.08.2025
(73) Proprietor: Valeo Electrification, 95892 Cergy Pontoise (FR)
(72) Inventor: SAMPATH, Lokesh, Chennai, 600130 (IN)
(74) Representative: Valeo Powertrain Systems
(86) International application number: PCT/EP2023/078290
(87) International publication number: WO 2024/079240

(56) References cited:
- FR-A1- 3 028 033
- FR-A1- 3 097 946
- JP-A- 2003 039 939
- US-A1- 2001 035 825
- US-A1- 2009 008 464
- US-A1- 2015 129 576

## Description

### TECHNICAL FIELD

The present invention relates to a thermal management system and method for an automobile vehicle. In particular, the invention relates to a thermal management system and a method for detecting and measuring the heat exchange fluid level in a fluid heater of an automobile vehicle.

### BACKGROUND

Automotive vehicles, for example, plug-in hybrid electric vehicles, electric vehicles with an internal combustion engine generally employ a rechargeable energy storage system (RESS), such as a battery pack or other rechargeable energy storage means, to store large amounts of energy for electric propulsion systems. In general, these type of vehicles may include a heater, for example a high voltage coolant heater, for regulating a temperature of a battery pack in order to maximize the charging capacity and life of the battery pack or to heat the vehicle interior.

The heater comprise a housing having an inlet and an outlet for flow of heat exchange fluid. A heating element is positioned within the housing in a heat transfer relationship with coolant for transferring heat to the heating elements. The heating element may, for example, be controlled by a control circuit. The heater further comprises a flow sensor to detect the coolant level of the heater and a temperature sensor to detect the raise in temperature off the heater. In case of absence of liquid in the heater, the temperature thereof will quickly rise with the risk of an inflammation of the nearby environment. It is thus necessary to be able to easily detect absence of heat exchange fluid. Though the sensor detects the level of coolant, it is not effective to determine the absence of coolant.

Some thermal management systems for automobile vehicles and methods for detecting and measuring a heat exchange fluid level for avoiding overheating are known from FR 3 028 033 A1, JP 2003 039939 A, US 2001/035825 A1, FR 3 097 946 A1, US 2015/129576 A1 or US 2009/008464 A1. These solutions either need a plurality of sensors or additional mathematical operations to determine the level of fluid.

Accordingly, there is a need for a thermal management system for automobile vehicles to detect and measure the heat exchange fluid level in a fluid heater of the automobile vehicle.

### SUMMARY

In the present description, some elements or parameters may be indexed, such as a first element and a second element. In this case, unless stated otherwise, this indexation is only meant to differentiate and name elements, which are similar but not identical. No idea of priority should be inferred from such indexation, as these terms may be switched without betraying the invention. Additionally, this indexation does not imply any order in mounting or use of the elements of the invention.

In view of forgoing, the present invention discloses a thermal management system for an automobile vehicle. The system comprises a fluid heater having a housing having an inlet and an outlet for flow of heat exchange fluid, a heating module positioned within the housing in a heat transfer relationship with the heat exchange fluid, and at least one temperature sensor positioned at the housing to generate a signal indicative of the temperature of the housing. The system further comprises a control unit in communication with the sensor configured to control the heating module. The control unit is configured to operate the heating module in at least one predetermined power level. The control unit is further configured to monitor a temperature of the housing to detect if the housing temperature exceeds a predefined temperature within a predefined time. The control unit is further configured to detect the presence of heat exchange fluid when the housing temperature is less than the predefined temperature within the predefined time. The control unit is further configured to determine the level of the heat exchange fluid based on the housing temperature and the time period to reach the housing temperature.

The control unit is further configured to determine the absence of heat exchange fluid when the housing temperature exceeds the predefined temperature within the predefined time.

The control unit is further configured to determine a series of power levels for operating the heating module. The predetermined power level is lesser than a nominal power level of the heating module. The control unit is further configured to transmit the data related to the heat exchange fluid to one or more control units of a vehicle.

The present invention further discloses a method for detecting and measuring a heat exchange fluid level in a fluid heater of a thermal management system for an automobile vehicle. The system comprises the heater having a housing having an inlet and outlet for flow of heat exchange fluid. The heater further comprises a heating module positioned in the housing in a heat exchange relationship with the heat exchange fluid, a sensor positioned at the housing to generate a signal indicative of the temperature of the housing, and a control unit to operate the heater. At one step, the control unit operates the heating module at least one predetermined power level.

At another step, the control unit monitors the temperature of the housing to detect if the housing temperature exceeds a predefined temperature within a predefined time. At another step, the control unit detects the presence of heat exchange fluid when the housing temperature is less than the predefined temperature within the predefined time. At yet another step, the control unit determines a level of the heat exchange fluid based on the housing temperature and the time period to reach the housing temperature.

At yet another step, the control unit determines the absence of heat exchange fluid when the housing temperature exceeds the predefined temperature within the predefined time. The control unit is further configured to determine a series of power levels for operating the heating module. The predetermined power level is lesser than a nominal power level of the heating module. At yet another step, the control unit transmits the data related to the heat exchange fluid to one or more control units of a vehicle.

### BRIEF DESCRIPTION OF THE DRAWINGS

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
FIG. 1 is a simplified, partial illustration of a thermal management system of an automobile vehicle controlling a fluid heater, according to an embodiment of the present invention;
FIG. 2 is a perspective view of a coolant heater of FIG. 1;
FIG. 3 is an cross-sectional view of a coolant heater of FIG. 1, and
FIG. 4 is a flowchart of a method for detecting and measuring the heat exchange fluid level in the fluid heater.

### DETAILED DESCRIPTION OF PREFERRED EMBODIMENTS

It must be noted that the figures disclose the invention in a detailed enough way to be implemented, said figures helping to better define the invention if needs be. The invention should however not be limited to the embodiment disclosed in the description.

The present invention discloses a thermal management system and a method for an automobile vehicle. The system comprises a fluid heater and a control unit in communication with the heater. The heater comprises a housing having an inlet and an outlet for flow of heat exchange fluid, a heating module positioned within the housing in a heat transfer relationship with the heat exchange fluid, and at least one temperature sensor disposed at the housing to generate a signal indicative of the temperature of the housing. The control unit is configured to operate the heating module in at least one predetermined power level.

The control unit is further configured to monitor a temperature of the housing to detect if the housing temperature exceeds a predefined temperature within a predefined time. The control unit is further configured to detect the presence of heat exchange fluid when the housing temperature is less than the predefined temperature within the predefined time. The control unit is configured to determine the level of the heat exchange fluid based on the housing temperature and the time period to reach the housing temperature. Thereby the system and method of the present invention effectively determines the absence of heat exchanger fluid level and also the level of heat exchange fluid without addition of any components to the fluid heater.

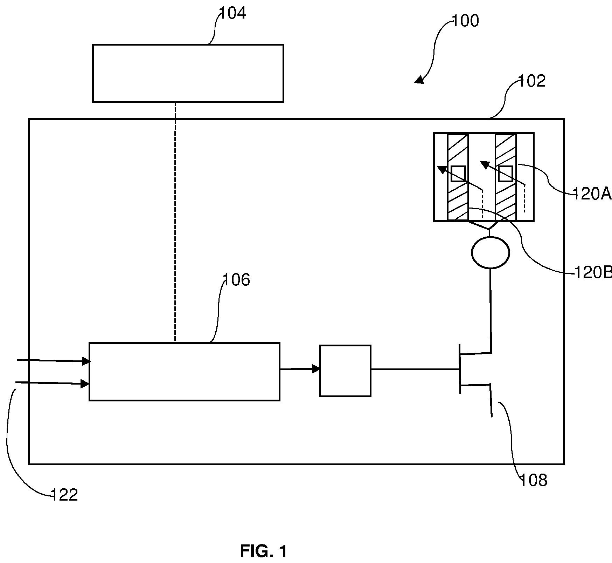

Referring to FIG.1, the thermal management system 100 comprises a fluid heater 102 and a control unit 104 in communication with the heater 102. A circuit for controlling the heater 102 includes microcontroller 106, and a transistor 108. The microcontroller 106 receives input data from the control unit 104 to operate the fluid heater 102. In an example, the heater 102 may be for heating the heat exchange fluid to be introduced into a heater core of the heating ventilation and air conditioning unit. In another example, the heater 102 may be for heating the heat exchange fluid to be circulated through the battery pack of a vehicle, for example a hybrid vehicle or an electrical vehicle. The heater 102 receives power 122 from an external power source.

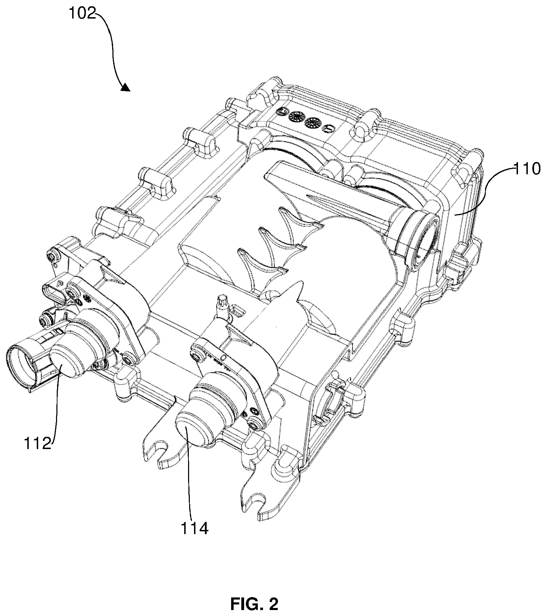

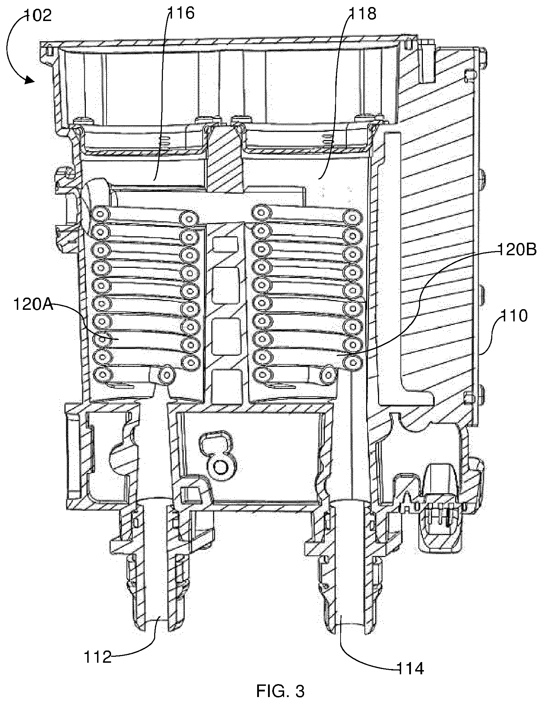

Referring to FIG. 2 and FIG. 3, the heater 102 comprising a housing 110 having an inlet port 112 for introduction of heat exchange fluid into the housing 110 and an outlet port 114 for discharge of the heat exchange fluid therefrom. The inlet port 112 and outlet port 114 also referred as inlet 112 and outlet 114, respectively, throughout this document. The housing 110 further comprises an internal space. The housing 110 may have various structures and shapes in accordance with required conditions and design specifications, and the present disclosure is not restricted or limited by the structure and the shape of the housing 110. The internal space may be divided into a first portion 116 and a second portion 118. In an example, the internal space may comprise a divider plate separates the internal space into the first portion 116 and the second portion 118.

The inlet port 112 is configured to be in fluid communication with the first portion 116 and the outlet port 114 is configured to be in fluid communication with the second portion 118 of the housing 110. The first portion 116 defines a first flow path and the second portion 118 defines a second flow path. The heat exchange fluid flows from the inlet port 112 and flow though the first flow path in a first direction. Further, the fluid directed to flow through the second flow path in a second direction. The first direction is different from the second direction. At least one heating module 120A, 120B in heat exchange relationship with the heat exchange fluid.

In another example, the heater 102 may includes at least two heating modules 120A, 120B. The heating modules120A, 120B are identical and are arranged side by side, substantially parallel. The side-by-side arrangement makes it possible to reduce the size of the heater 102 in the longitudinal direction. This arrangement has a low thermal inertia and a low pressure drop. However, alternatively, an arrangement comprising heating modules 120A, 120B having a different arrangement can be envisaged. Alternatively, the heater 102 may comprise one or more heating modules 120A, 120B. In one example, the heating module 120A, 120B may be a resistive heating element in electrical communication with a power source of a vehicle for supplying electrical energy to the heater 102. The heating module 120A, 120B, during operation of the heater 102, may be increase the temperature of the housing 110.

The heater 102 further comprises a first temperature sensor and a second temperature sensor. The heater 102 is further in communication with the control unit 104 of the vehicle. The first temperature sensor is configured for transmission of signal indicative of a temperature of the heat exchange fluid to the control unit 104. The second temperature sensor configured for transmission of signal indicative of a temperature of the housing 110 to the control unit 104. In an example, the heat exchange fluid may be a coolant. In one embodiment, the control unit 104 may be a part of the heater 102.

The control unit 104 includes one or more processors and one or more memory units. The memory unit includes a set of modules. Each of these modules may be formed of executable code, which may be executed by the processor. The memory unit further comprises a series of power levels, the temperature, also referred as predefined temperature, of the housing 110 for the given power level in the presence of heat exchange fluid, the temperature of the housing 110 for the given power level in the absence of heat exchange fluid, information related to a set of predefined time to reach the set of predefined temperature in the absence of heat exchange fluid and information related to a set of predefined time to reach the set of predefined temperature in the presence of heat exchange fluid.

During operation of the heater 102, the control unit 104 is configured to supply power 122 to the heating modules 120A, 120B from the power source. The heat exchange fluid flows from the inlet port 112, then into the internal space of the annular spaces of the heating modules 120A, 120B. The heating module 120A, 120B increases the temperature of the heat exchange fluid before being discharged through the outlet port 114. The temperature sensor for measuring the temperature of the heat exchange fluid and transmits the signal indicating the temperature of the heat exchange fluid to the control unit 104.

Further, the temperature sensor also measures the temperature of the housing 110 and transmits the signal indicating the temperature of the housing 110 to the control unit 104. The heat from the heat exchange fluid or from the heating module 120A, 120B in the absence of heat exchange fluid propagate to the housing 110. The temperature of the housing 110 may increase rapidly in the absence of the heat exchange fluid, which is used to determine the absence of the heat exchange fluid in the heater 102. Further, the temperature of the housing 110 is used to determine the level of the heat exchange fluid.

The control unit 104 may determine a series of power levels for operating the heating module 120A, 120B. Alternatively, the control unit 104 use the information stored in the memory for operating the heating module 120A, 120B. The control unit 104 is configured to operate the heating module 120A, 120B in at least one predetermined power level, and monitors the temperature of the housing 110 using the temperature sensor. If the temperature of the housing 110 is less than the predefined temperature within the predefined time, the control unit 104 determines the presence of the coolant. If the temperature of the housing 110 exceeds the predefined temperature within the predefined time, the control unit 104 determines the absence of the coolant. The control unit 104 is further configured to transmit the data related to the coolant to vehicle control unit 104. The control unit 104 is further configured to determine the level of heat exchange fluid based on the housing 110 temperature and the time to reach the housing 110 temperature.

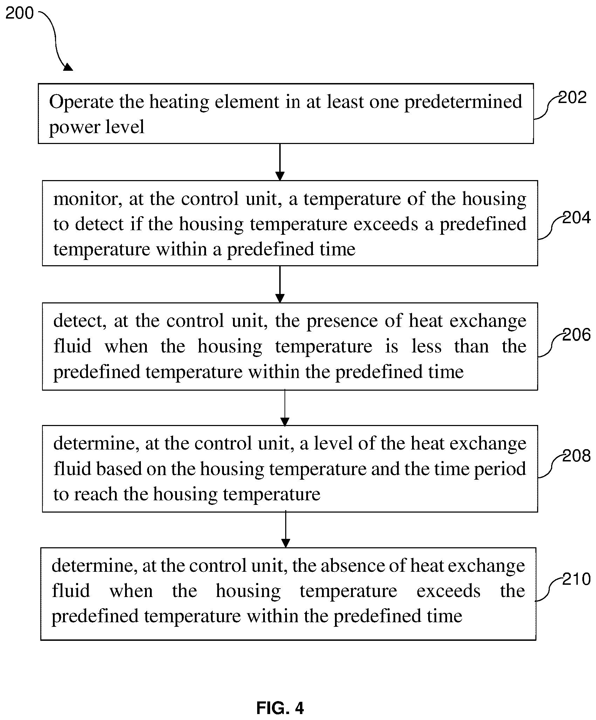

Referring to FIG. 4, the present invention discloses a method for detecting and measuring the heat exchange fluid level of a fluid heater 102 of a thermal management system 100 for an automobile vehicle. The system 100 comprises the fluid heater 102 and a control unit 104 in communication with the fluid heater 102. The heater 102 comprises a housing 110 having an inlet port 110 and an outlet port 114 for flow of heat exchange fluid, a heating module 120A, 120B positioned within the housing 110 in a heat transfer relationship with the heat exchange fluid, and at least one temperature sensor positioned at the housing 110 to generate a signal indicative of the temperature of the housing 110. The control unit 104 is configured to operate the heater 102.

The control unit 104 includes one or more processors and one or more memory units. The memory unit includes a set of modules. Each of these modules may be formed of executable code, which may be executed by the processor. The memory unit further comprises a series of power levels, the temperature, also referred as predefined temperature, of the housing 110 for the given power level in the presence of heat exchange fluid, the temperature of the housing 110 for the given power level in the absence of heat exchange fluid, information related to a set of predefined time to reach the set of predefined temperature in the absence of coolant and information related to a set of predefined time to reach the set of predefined temperature in the presence of coolant.

At step 202, the control unit 104 transmits input to the heater 102 to operate the heating module 120A, 120B in at least one predetermined power level. The predetermined power level is lesser than a nominal power level. The control unit 104 operates the heater 102 at the predetermined power level. The temperature sensor periodically transmits signal indicative of the temperature of the housing 110 to the control unit 104.

At step 204, the control unit 104 monitors the temperature of the housing 110 to detect if the housing 110 temperature exceeds the predefined temperature within the predefined time. At step 206, the control unit 104 detects the presence of coolant if the housing 110 temperature is less than the predefined temperature within the predefined time. At step 208, the control unit 104 could determine the level of the heat exchange fluid based on the housing 110 temperature and the time period to reach the housing 110 temperature. At step 210, the control unit 104 detects the absence of coolant if the housing 110 temperature is more than the predefined temperature within the predefined time. The control unit 104 could turn off the heater 102 in the absence of coolant. The control unit 104 could also alert the subsystems of vehicle and the user regarding the absence of coolant. The control unit 104 could also sends data related to insufficient level of the heat exchange fluid to subsystems of the vehicle and user of the vehicle.

Thereby the system 100 and method 200 of the present invention effectively determines the absence of heat exchanger fluid level and also the level of heat exchange fluid without addition of any components to the fluid heater 102. The detection of the presence or absence of heat exchange fluid allows to safely operate the heater 102 without damaging the heater 102, or the working environment of the heater 102.

In any case, the invention cannot and should not be limited to the embodiments specifically described in this document, as other embodiments might exist. The invention shall spread to any equivalent means and any technically operating combination of means.

## Claims

1. A method for detecting and measuring a heat exchange fluid level in a fluid heater (102) of a thermal management system (100) for an automobile vehicle, the system (100) comprising the heater (102) having a housing (110) having an inlet (112) and outlet (114) for flow of heat exchange fluid, a heating module (120A, 120B) positioned in the housing (110) in a heat exchange relationship with the heat exchange fluid, a sensor positioned at the housing (110) to generate a signal indicative of the temperature of the housing (110), and a control unit (104) to operate the heater (102), the method comprising the steps of:
operating the heating module (120A, 120B) in at least one predetermined power level;
monitoring, at the control unit (104), a temperature of the housing (110) to detect if the housing (110) temperature exceeds a predefined temperature within a predefined time;
detecting, at the control unit (104), the presence of heat exchange fluid when the housing (110) temperature is less than the predefined temperature within the predefined time, and
determining, at the control unit (104), a level of the heat exchange fluid based on the housing (110) temperature and the time period to reach the housing (110) temperature.

2. The method of claim 1, further comprising a step of: determining, at the control unit (104), the absence of heat exchange fluid when the housing (110) temperature exceeds the predefined temperature within the predefined time.

3. The method of claim 1, further comprising a step of: determining, at the control unit (104), a series of power levels for operating the heating module (120A, 120B).

4. The method of claim 1, further comprising a step of: transmitting the data related to the heat exchange fluid to one or more control units of the vehicle.

5. The method of claim 3, wherein the predetermined power level is lesser than a nominal power level of the heating module (120A, 120B).

6. A thermal management system (100) for an automobile vehicle, comprising:
a fluid heater (102) having:
a housing (110) having an inlet (112) and an outlet (114) for flow of heat exchange fluid,
a heating module (120A, 120B) positioned within the housing (110) in a heat transfer relationship with the heat exchange fluid, and
at least one temperature sensor positioned at the housing (110) to generate a signal indicative of the temperature of the housing (110)
a control unit (104) in communication with the sensor configured to control the heating module (120A, 120B), the control unit (104) is configured to:
operate the heating module (120A, 120B) in at least one predetermined power level;
monitor a temperature of the housing (110) to detect if the housing (110) temperature exceeds a predefined temperature within a predefined time;
detect the presence of heat exchange fluid when the housing (110) temperature is less than the predefined temperature within the predefined time, and
determine the level of the heat exchange fluid based on the housing (110) temperature and the time period to reach the housing (110) temperature.

7. The thermal management system (100) of claim 6, wherein the control unit (104) is configured to determine the absence of heat exchange fluid when the housing (110) temperature exceeds the predefined temperature within the predefined time.

8. The thermal management system (100) of claim 6, wherein the control unit (104) is configured to determine a series of power levels for operating the heating module (120A, 120B).

9. The thermal management system (100) of claim 8, wherein the predetermined power level is lesser than a nominal power level of the heating module (120A, 120B).

10. The thermal management system (100) of claim 6, wherein the control unit (104) is configured to transmit the data related to the heat exchange fluid to one or more control units of the vehicle.

## Patentansprüche

1. Ein Verfahren zur Erkennung und Messung eines Wärmeträgerflusspegels in einem Fluiderhitzer (102) eines Wärmemanagementsystems (100) für ein Kraftfahrzeug, wobei das System (100) den Erhitzer (102) mit einem Gehäuse (110) mit einem Einlass (112) und einem Auslass (114) für den Durchfluss von Wärmeträgerfluid, ein Heizmodul (120A, 120B), das im Gehäuse (110) in einer Wärmeaustauschbeziehung mit dem Wärmeträgerfluid positioniert ist, einen am Gehäuse (110) positionierten Sensor zur Erzeugung eines Signals, das die Temperatur des Gehäuses (110) anzeigt, und eine Steuereinheit (104) zum Betrieb des Erhitzers (102) umfasst, wobei das Verfahren die folgenden Schritte umfasst:
Betreiben des Heizmoduls (120A, 120B) mit mindestens einer vorbestimmten Leistungsstufe;
Überwachen, an der Steuereinheit (104), einer Temperatur des Gehäuses (110), um festzustellen, ob die Gehäusetemperatur (110) innerhalb einer vordefinierten Zeit eine vordefinierte Temperatur überschreitet;
Erkennen, an der Steuereinheit (104), des Vorhandenseins von Wärmeträgerfluid, wenn die Gehäusetemperatur (110) innerhalb der vordefinierten Zeit unter der vordefinierten Temperatur liegt, und
Bestimmen, an der Steuereinheit (104), eines Pegels des Wärmeträgerfluids basierend auf der Gehäusetemperatur (110) und dem Zeitraum bis zum Erreichen der Gehäusetemperatur (110).

2. Das Verfahren nach Anspruch 1, das ferner einen Schritt umfasst: Bestimmen, an der Steuereinheit (104), der Abwesenheit von Wärmeträgerfluid, wenn die Gehäusetemperatur (110) innerhalb der vordefinierten Zeit die vordefinierte Temperatur überschreitet.

3. Das Verfahren nach Anspruch 1, das ferner einen Schritt umfasst: Bestimmen, an der Steuereinheit (104), einer Reihe von Leistungsstufen für den Betrieb des Heizmoduls (120A, 120B).

4. Das Verfahren nach Anspruch 1, das ferner einen Schritt umfasst: Übertragen der Daten in Bezug auf das Wärmeträgerfluid an eine oder mehrere Steuereinheiten des Fahrzeugs.

5. Das Verfahren nach Anspruch 3, wobei die vorbestimmte Leistungsstufe geringer ist als eine Nennleistungsstufe des Heizmoduls (120A, 120B).

6. Ein Wärmemanagementsystem (100) für ein Kraftfahrzeug, umfassend:
einen Fluiderhitzer (102) mit:
einem Gehäuse (110) mit einem Einlass (112) und einem Auslass (114) für den Durchfluss von Wärmeträgerfluid,
einem Heizmodul (120A, 120B), das innerhalb des Gehäuses (110) in einer Wärmeübertragungsbeziehung mit dem Wärmeträgerfluid positioniert ist, und
mindestens einem Temperatursensor, der am Gehäuse (110) positioniert ist, um ein Signal zu erzeugen, das die Temperatur des Gehäuses (110) anzeigt
eine Steuereinheit (104) in Kommunikation mit dem Sensor, die konfiguriert ist, das Heizmodul (120A, 120B) zu steuern, wobei die Steuereinheit (104) konfiguriert ist:
das Heizmodul (120A, 120B) mit mindestens einer vorbestimmten Leistungsstufe zu betreiben;
eine Temperatur des Gehäuses (110) zu überwachen, um festzustellen, ob die Gehäusetemperatur (110) innerhalb einer vordefinierten Zeit eine vordefinierte Temperatur überschreitet;
das Vorhandensein von Wärmeträgerfluid zu erkennen, wenn die Gehäusetemperatur (110) innerhalb der vordefinierten Zeit unter der vordefinierten Temperatur liegt, und
den Pegel des Wärmeträgerfluids basierend auf der Gehäusetemperatur (110) und dem Zeitraum bis zum Erreichen der Gehäusetemperatur (110) zu bestimmen.

7. Das Wärmemanagementsystem (100) nach Anspruch 6, wobei die Steuereinheit (104) konfiguriert ist, die Abwesenheit von Wärmeträgerfluid zu bestimmen, wenn die Gehäusetemperatur (110) innerhalb der vordefinierten Zeit die vordefinierte Temperatur überschreitet.

8. Das Wärmemanagementsystem (100) nach Anspruch 6, wobei die Steuereinheit (104) konfiguriert ist, eine Reihe von Leistungsstufen für den Betrieb des Heizmoduls (120A, 120B) zu bestimmen.

9. Das Wärmemanagementsystem (100) nach Anspruch 8, wobei die vorbestimmte Leistungsstufe geringer ist als eine Nennleistungsstufe des Heizmoduls (120A, 120B).

10. Das Wärmemanagementsystem (100) nach Anspruch 6, wobei die Steuereinheit (104) konfiguriert ist, die Daten in Bezug auf das Wärmeträgerfluid an eine oder mehrere Steuereinheiten des Fahrzeugs zu übertragen.

## Revendications

1. Un procédé de détection et de mesure d'un niveau de fluide caloporteur dans un réchauffeur de fluide (102) d'un système de gestion thermique (100) pour un véhicule automobile, le système (100) comprenant le réchauffeur (102) ayant un boîtier (110) ayant une entrée (112) et une sortie (114) pour l'écoulement du fluide caloporteur, un module de chauffage (120A, 120B) positionné dans le boîtier (110) en relation d'échange thermique avec le fluide caloporteur, un capteur positionné au niveau du boîtier (110) pour générer un signal indicatif de la température du boîtier (110), et une unité de commande (104) pour faire fonctionner le réchauffeur (102), le procédé comprenant les étapes suivantes :
faire fonctionner le module de chauffage (120A, 120B) à au moins un niveau de puissance prédéterminé ;
surveiller, au niveau de l'unité de commande (104), une température du boîtier (110) pour détecter si la température du boîtier (110) dépasse une température prédéfinie dans un délai prédéfini ;
détecter, au niveau de l'unité de commande (104), la présence de fluide caloporteur lorsque la température du boîtier (110) est inférieure à la température prédéfinie dans le délai prédéfini, et
déterminer, au niveau de l'unité de commande (104), un niveau du fluide caloporteur en fonction de la température du boîtier (110) et de la période de temps nécessaire pour atteindre la température du boîtier (110).

2. Le procédé selon la revendication 1, comprenant en outre une étape consistant à :
déterminer, au niveau de l'unité de commande (104), l'absence de fluide caloporteur lorsque la température du boîtier (110) dépasse la température prédéfinie dans le délai prédéfini.

3. Le procédé selon la revendication 1, comprenant en outre une étape consistant à :
déterminer, au niveau de l'unité de commande (104), une série de niveaux de puissance pour faire fonctionner le module de chauffage (120A, 120B).

4. Le procédé selon la revendication 1, comprenant en outre une étape consistant à :
transmettre les données relatives au fluide caloporteur à une ou plusieurs unités de commande du véhicule.

5. Le procédé selon la revendication 3, dans lequel le niveau de puissance prédéterminé est inférieur à un niveau de puissance nominal du module de chauffage (120A, 120B).

6. Un système de gestion thermique (100) pour un véhicule automobile, comprenant :
un réchauffeur de fluide (102) ayant :
un boîtier (110) ayant une entrée (112) et une sortie (114) pour l'écoulement du fluide caloporteur,
un module de chauffage (120A, 120B) positionné à l'intérieur du boîtier (110) en relation de transfert thermique avec le fluide caloporteur, et
au moins un capteur de température positionné au niveau du boîtier (110) pour générer un signal indicatif de la température du boîtier (110)
une unité de commande (104) en communication avec le capteur, configurée pour contrôler le module de chauffage (120A, 120B), l'unité de commande (104) étant configurée pour :
faire fonctionner le module de chauffage (120A, 120B) à au moins un niveau de puissance prédéterminé ;
surveiller une température du boîtier (110) pour détecter si la température du boîtier (110) dépasse une température prédéfinie dans un délai prédéfini ;
détecter la présence de fluide caloporteur lorsque la température du boîtier (110) est inférieure à la température prédéfinie dans le délai prédéfini, et
déterminer le niveau du fluide caloporteur en fonction de la température du boîtier (110) et de la période de temps nécessaire pour atteindre la température du boîtier (110).

7. Le système de gestion thermique (100) selon la revendication 6, dans lequel l'unité de commande (104) est configure pour déterminer l'absence de fluide caloporteur lorsque la température du boîtier (110) dépasse la température prédéfinie dans le délai prédéfini.

8. Le système de gestion thermique (100) selon la revendication 6, dans lequel l'unité de commande (104) est configurée pour déterminer une série de niveaux de puissance pour faire fonctionner le module de chauffage (120A, 120B).

9. Le système de gestion thermique (100) selon la revendication 8, dans lequel le niveau de puissance prédéterminé est inférieur à un niveau de puissance nominal du module de chauffage (120A, 120B).

10. Le système de gestion thermique (100) selon la revendication 6, dans lequel l'unité de commande (104) est configurée pour transmettre les données relatives au fluide caloporteur à une ou plusieurs unités de commande du véhicule.
